# EUROPÄISCHE PATENTANMELDUNG

(11) **EP 4 606 222 A1**
(43) Veröffentlichungstag der Anmeldung: **27.08.2025**
(21) Anmeldenummer: 24159373.0
(22) Anmeldetag: 23.02.2024
(51) Int. Cl.: A23K 10/14, A23K 10/20, A23K 10/28, A23K 10/33, A23K 20/105, A23K 20/147, A23K 20/163, A23K 20/20, A23K 50/10

(54) **TIERFUTTERZUSATZ**

(71) Anmelder: DMK Deutsches Milchkontor GmbH, 27404 Zeven (DE)
(72) Erfinder: DÖRING, Sven-Rainer, 27404 Zeven (DE); STEFFENS, Marco, 27404 Elsdorf (DE)
(74) Vertreter: Soilan Rodriguez, Jose David

(57) **Zusammenfassung**

Vorgeschlagen wird ein Tierfutterzusatz umfassend oder bestehend aus:
(a) Glucose,
(b) Galactose,
(c) Lactose,
(d) aus Milch stammende Mineralien, vorzugsweise aus Kuhmilch,
(e) aus Milch stammenden Proteinen, vorzugsweise aus Kuhmilch,
(f) organische Säure, und
(g) Wasser,
wobei der Bestandteil (c) optional ist.

## Beschreibung

### GEBIET DER ERFINDUNG

Die vorliegende Erfindung betrifft einen Tierfutterzusatz, dessen Herstellungsverfahren sowie derer Verwendung, insbesondere als Melasse-Ersatzstoff, in der Bereitstellung von Tierfutter.

### TECHNOLOGISCHER HINTERGRUND

Melasse entsteht bei der Zuckerherstellung aus Zuckerrüben. Es ist eine süße, dunkle, sirupartige Flüssigkeit (50 % Zucker), die nach dem Auskristallisieren des Zuckers zurückbleibt. Traditionell wird Melasse als wohlschmeckender, energiereicher Futterzusatz in der Landwirtschaft eingesetzt. In viele Fällen wird Melasse mit konventionellem Trockenfutter von den Bauern selbst gemischt. Melasse ist aber eine hochvisköse Substanz, die außerdem dazu neigt, sich im Winter wegen der niedrigen Temperaturen zu verfestigen, was dem Bauer die Zubereitung des Tierfutters beträchtlich erschwert. Darüber hinaus wird Melasse nicht von allen Tieren als Geschmackverstärker gemocht. Es besteht also der Bedarf nach einem Ersatzstoff für die Melasse, der weniger viskos ist und bessere Geschmackseigenschaften aufweist.

Ferner, ist in der Milchindustrie die Herstellung von Abfallprodukten oder Strömen, die oft einen hohen Gehalt an Mineralien und Zucker (Lactose) enthalten, ein bekanntes Problem, da nicht immer möglich ist, diese Abfallprodukte oder Ströme zu verarbeiten und weiter zu verwenden. Es besteht daher ein großes Interesse, nicht nur wirtschaftlich, sondern auch im Interesse des Umweltschutzes, eine Anwendung für die oben genannten von der Milchindustrie generierten Abfallprodukte oder Ströme, so dass sie weiterverarbeitet werden und sozusagen *"recycelt"* werden können.

### AUFGABE DER ERFINDUNG

Die Aufgabe der vorliegenden Erfindung hat daher darin bestanden, eine Zusammensetzung bereitzustellen, die als Melasse-Ersatzstoff in der Herstellung von Tierfutter verwendet werden kann, so dass die Viskosität, insbesondere die Verfestigung in der Kälte, sowie die geschmacklichen Probleme, die die Verwendung von Melasse mit sich bringt, gelöst werden können. Außerdem sollte diese Zusammensetzung aus einer der oben genannten von der Milchindustrie generierten Abfallprodukte oder Ströme herstellbar sein.

### BESCHREIBUNG DER ERFINDUNG

Ein erster Gegenstand der Erfindung betrifft eine Zusammensetzung, insbesondere ein Tierfutterzusatz, umfassend oder bestehend aus
(a) Glucose,
(b) Galactose,
(c) Lactose
(d) aus Milch stammende Mineralien, vorzugsweise aus Kuhmilch,
(e) aus Milch stammenden Proteine, vorzugsweise aus Kuhmilch,
(f) organische Säure, und
(g) Wasser,
wobei der Bestandteil (c) optional ist.

Überraschenderweise wurde gefunden, dass die erfindungsgemäße Zusammensetzung die eingangs geschilderte umfangreiche Aufgabe vollständig erfüllt. In der Tat konnte festgestellt werden, dass die erfindungsgemäße Zusammensetzung (Tierfutterzusatz) nicht nur eine niedrigere Viskosität als Melasse aufweist, was die Vorbereitung des Tierfutters durch das Mischen mit Trockenfutter erleichtert, sondern auch dass das Tierfutter enthaltend die erfindungsgemäße Zusammensetzung (Tierfutterzusatz) eine deutlich größere Akzeptanz seitens der Tiere genießt als das gleiche Tierfutter, das Melasse enthält. Darüber hinaus zeigt die erfindungsgemäße Zusammensetzung (Tierfutterzusatz) bei Kälte eine deutlich niedrigere Tendenz zur Verfestigung als Melasse.

### Tierfutterzusatz

In einer bevorzugten Ausführungsform umfasst oder besteht der erfindungsgemäße Tierfutterzusatz aus:
(a) etwa 20 bis etwa 40 Gew.- % Glucose,
(b) etwa 20 bis etwa 40 Gew.- % Galactose,
(c) 0 bis etwa 40 Gew.-% Lactose,
(d) etwa 1 bis etwa 10 Gew.- % aus Milch stammende Mineralien,
(d) etwa 1 bis etwa 10 Gew.- % aus Milch stammende Mineralien, und
(e) etwa 1 bis etwa 7 Gew.- % organische Säure,
mit der Maßgabe, dass sich alle Mengenangaben mit Wasser zu 100 Gew.-% ergänzen.
Die oben genannten Gew.-% beziehen sich auf das Gesamtgewicht des erfindungsgemäße Tierfutterzusatzes.

In einer weiteren bevorzugten Ausführungsform umfasst oder besteht der erfindungsgemäße Tierfutterzusatz aus:
(a) etwa 25 bis etwa 35 Gew.- % Glucose,
(b) etwa 25 bis etwa 35 Gew.- % Galactose,
(c) 0 bis etwa 30 Gew.-% Lactose,
(d) etwa 2 bis etwa 4 Gew.- % aus Milch stammenden Mineralien,
(d) etwa 2 bis etwa 4 Gew.- % aus Milch stammenden Proteinen,
(e) etwa 3 bis etwa 5 Gew.- % organischer Säure,
mit der Maßgabe, dass sich alle Mengenangaben mit Wasser zu 100 Gew.-% ergänzen.
Die oben genannten Gew.-% beziehen sich auf das Gesamtgewicht des erfindungsgemäße Tierfutterzusatzes. Um Unklarheiten auszuschließen wird darauf hingewiesen, dass die vorliegende Anmeldung Mengen, die sich zu weniger oder zu mehr als 100 % ergänzen, nicht umfasst. Der Fachmann ist ferner in der Lage, aus der vorliegenden Offenbarung solche Zusammensetzungen hinsichtlich ihrer Mengen an den Komponenten (a) bis (e) auszuwählen, die zusammen 100 % ergeben, ohne hierzu erfinderisch tätig werden zu müssen.

Wie oben ausgeführt, enthält der erfindungsgemäße Tierfutterzusatz organische Säuren, die gewährleisten, dass der erfindungsgemäße Tierfutterzusatz mikrobiologisch einwandfrei ist und auch nicht verdirbt. In einer bevorzugten Ausführungsform ist die organische Säure ausgewählt aus der Gruppe bestehend aus Weinsäure, Apfelsäure, Shikimisäure, Milchsäure, Essigsäure, Zitronensäure, Ascorbinsäure, Ameisensäure, Bernsteinsäure und Fumarsäure oder Mischungen daraus, vorzugsweise aus der Gruppe bestehend aus Weinsäure, Apfelsäure, Milchsäure, Essigsäure, Zitronensäure, Ascorbinsäure, oder Mischungen daraus, bevorzugt aus der Gruppe bestehend aus Weinsäure, Apfelsäure, Milchsäure, Zitronensäure, Ascorbinsäure, oder Mischungen daraus. In einer besonders bevorzugte Ausführungsform ist die organische Säure Milchsäure.

Wie oben ausgeführt, enthält der erfindungsgemäße Tierfutterzusatz aus Milch stammende Mineralien. Diese Mineralien sind für den Fachmann bestens bekannt, und müssen daher nicht weiter erläutert werden. Jedoch handelt sich dabei vorzugsweise um Mineralien, die für eine Ultrafiltration-Membran mit einem Porendurchmesser im Bereich von etwa 3.000 bis etwa 50.000 und vorzugsweise etwa 5.000 bis etwa 25.000 Dalton durchlässig sind.

Wie oben ausgeführt, enthält der erfindungsgemäße Tierfutterzusatz aus Milch stammende Proteine. Diese Proteine sind für den Fachmann bestens bekannt, und müssen daher nicht weiter erläutert werden. Jedoch handelt sich dabei vorzugsweise um Proteine, die für eine Ultrafiltration-Membrane mit einem Porendurchmesser im Bereich von etwa 1.000 bis etwa 50.000 und vorzugsweise etwa 5.000 bis etwa 25.000 Dalton durchlässig sind.

Der erfindungsgemäße Tierfutterzusatz zeichnet sich dadurch aus, dass er entweder frei von Lactose ist oder nur einen geringen Gehalt an Lactose aufweist. Ziel ist es hier vor allem, die Bildung von Kristallen im Produkt zu verhindern, da dies die Produktqualität negativ beeinflusst.

In einer bevorzugten Ausführungsform liegt der Gehalt an Lactose unter 0,1 Gew.-%, bezogen auf das Gesamtgewicht des erfindungsgemäße Tierfutterzusatz, vorzugsweise unter 0,01 Gew.-%.

In einer bevorzugten Ausführungsform weist der erfindungsgemäße Tierfutterzusatz einen pH-Wert auf, welcher im Bereich von etwa 4,5 bis etwa 5,5 liegt, vorzugsweise im Bereich von etwa 4,7 bis etwa 5,0. Es konnte festgestellt werden, dass ein pH-Wert von 3,9 besonders vorteilhaft für die mikrobiologischen Eigenschaften des erfindungsgemäßen Tierfutterzusatzes ist. Demzufolge weist in einer besonders bevorzugte Ausführungsform der erfindungsgemäße Tierfutterzusatz in einer besonders bevorzugte Ausführungsform einen pH-Wert von 3,9 auf.

Die Viskosität spielt eine wichtige Rolle bei der einfachen Handhabung des Tierfutterzusatzes für den vorgesehenen Zweck, d. h. für die Zubereitung von Tierfutter nach dem Mischen mit Trockenfutter. In dieser Hinsicht könnte festgestellt werden, dass eine Viskosität nach Brookfield (RVT, Spindel 1, 10 Upm) bei 20 °C im Bereich von etwa 5.000 bis etwa 30.000 mPas vorteilhaft für die Handhabung des erfindungsgemäßen Tierfutterzusatzes für den vorgesehenen Zweck ist. Demzufolge, liegt die Viskosität nach Brookfield (RVT, Spindel 1, 10 Upm) bei 20 °C des erfindungsgemäßen Tierfutterzusatzes in einer bevorzugten Ausführungsform im Bereich von etwa 5.000 bis etwa 20.000 mPas vorzugsweise etwa 6.000 bis etwa 10.000 mPas und insbesondere etwa 7.000 bis etwa 9.000 mPas. Diese Viskositäten werden durch die erfindungsgemäßen Zubereitungen sicher erreicht.

Der erfindungsgemäße Tierfutterzusatz weist einen hohen Brix-Wert auf. In einer bevorzugten Ausführungsform liegt der Brix-Wert des erfindungsgemäßen Tierfutterzusatzes im Bereich von etwa 50 bis etwa 90 % vorzugsweise im Bereich von etwa 65 bis etwa 72 %.

### Herstellverfahren

Ein weiterer Gegenstand der vorliegenden Erfindung betrifft ein Verfahren zur Herstellung des erfindungsgemäßen Tierfutterzusatzes, umfassend oder bestehend aus den folgenden Schritten:
(i) Bereitstellen einer Magermilch oder Molke,
(ii) Ultrafiltration der Magermilch oder Molke aus dem Schritt (a) unter Erhalt eines proteinreichen und teildemineralisierten Retentats und eines an Proteinen und Mineralien verarmten Permeats,
(iii) Aufkonzentrierung des Permeats aus dem Schritt (b) unter Erhalt eines Zwischenprodukts, welches eine Trockenmasse von etwa 40 bis etwa 60 Gew.-% aufweist;
(iv) Hydrolyse des Zwischenprodukts aus dem Schritt (c) unter Zusatz von Lactase;
(v) Aufkonzentrierung des hydrolysierten Zwischenprodukts aus dem Schritt (d) unter Erhalt eines Zwischenprodukts, welches eine Trockenmasse von etwa 50 bis etwa 80 Gew.-% aufweist;
(vi) Einstellung des pH-Wertes auf einen Wert von etwa 4,5 bis etwa 5,5.

Gemäß dem erfindungsgemäßen Herstellungsverfahren wird das Ausgangsmaterial (im Sinne der vorliegenden Erfindung kann dieses entweder Magermilch oder Molke sein) im Schritt (ii) einer Ultrafiltration unterworfen, so dass ein Milchproteinkonzentrat (Retentat) und ein Lactose- und mineralreiches Permeat erhalten werden.

Unter dem Begriff Ultrafiltration wird eine Filtration durch Membranen mit einer Porengröße < 0,1 µm verstanden. Es handelt es sich um rein physikalische, d.h. mechanische Membrantrennverfahren, welches nach Prinzip des mechanischen Größenausschlusses arbeitet: alle Partikel in den Fluiden, die größer als die Membranporen sind, werden von der Membran zurückgehalten. Treibende Kraft ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind.

Die Ultrafiltration erfolgt vorzugsweise bei Temperaturen im Bereich von etwa 10 bis etwa 55, vorzugsweise 10 bis 20 °C, wobei die Membranen vorzugsweise einen Porendurchmesser im Bereich von etwa 3.000 bis etwa 50.000 und vorzugsweise etwa 5.000 bis etwa 25.000 Dalton besitzen. Vorzugsweise handelt es sich um sogenannte Spiralwickelmembranen oder Platte-Rahmen-Module aus Polysulfon- oder Polyethylenmembranen.

Die Ultrafiltration erfolgt unter Zugabe von Diawasser bzw. einer vergleichbaren Trinkwasserqualität; in einer bevorzugten Ausführungsform beträgt der Verdünnungsfaktor etwa 5-15, vorzugsweise etwa 10. Das mittels Ultrafiltration gewonnene Retentat wird abgetrennt und anders weiterverwertet. Das mittels Ultrafiltration gewonnene Permeat wird dann im Schritt (iii) auf eine Trockenmasse von etwa 20 bis etwa 40 Gew.-% aufkonzentriert. Dadurch wird die optimale Konzentration erreicht, bei der die nachfolgende Lactose-Hydrolyse optimal abläuft. In einer bevorzugten Ausführungsform wird das Permeat des Schritts (b) auf eine Trockenmasse aufkonzentriert, die im Bereich von etwa 25 bis etwa 35 % liegt, ganz insbesondere auf eine Trockenmasse von etwa 30 %. Diese Entwässerung oder Aufkonzentrierung erfolgt vorzugsweise in so genannten *"Follfilmverdampfern"* Im Anschluss erfolgt die Aufkonzentrierung, bis die gewünschte Trockenmasse erreicht ist.

Im Schritt (iv) wird das im Schritt (iii) gewonnene Lactose enthaltende Zwischenprodukte einer Hydrolyse unterworfen, so dass Lactose zu Glucose und Galactose gespalten wird; dies kann zu einem teilweisen oder auch vollständigen Abbau der Lactose führen. Zum Abbau in die beiden Zuckerkomponenten wird Lactose mit dem Enzym Lactase (auch als LPH oder LCT bezeichnet) versetzt. Die Hydrolyse kann batchweise oder kontinuierlich über einen Zeitraum von etwa 15 bis etwa 1440 Minuten durchgeführt werden und erfolgt vorzugsweise in einem Rührbehälter mit kontinuierlichem Zulauf und Ablauf sowie einer Dosiervorrichtung zur Zugabe des Enzyms und einem am Boden des Reaktors befindlichen Ventil zum Ablassen desaktivierten Enzyms, das im Laufe der Zeit sedimentiert. Es hat sich als vorteilhaft erwiesen, eine wirksame Enzymkonzentration von etwa 180.000 bis 250.000 FCC-Einheiten Lactase pro kg zu hydrolysierender Lactose einzusetzen. Es hat sich auch als vorteilhaft erwiesen, die Reaktion bei Temperaturen im Bereich von etwa 45 bis etwa 55 °C, durchzuführen ganz besonders bevorzugt bei etwa 50 °C. Es hat sich auch als vorteilhaft erwiesen, die Reaktion bei einem leicht sauren pH-Wert von etwa 5 bis 6 durchzuführen. In einer ersten speziellen Ausführungsform setzt man in Schritt (iv) eine solche Menge Lactase ein, dass die im Zwischenprodukt des Schritts (iii) enthaltene Menge an Lactose vollständig in Glucose und Galactose gespalten wird.

Danach erfolgt eine Aufkonzentrierung des im Schritt (iv) gewonnenen hydrolysierten Zwischenprodukts, und zwar auf einer Trockenmasse von etwa 50 bis etwa 80 Gew.-%. In einer bevorzugten Ausführungsform erfolgt die Aufkonzentrierung des im Schritt (iv) gewonnenen hydrolysierten Zwischenprodukts auf einer Trockenmasse von etwa 65 bis etwa 75 Gew.-%, ganz insbesondere auf eine Trockenmasse etwa 70 Gew.-%. Diese Entwässerung oder Aufkonzentrierung erfolgt beispielsweise in Wirbelschichtverdampfern, Plattenverdampfern oder vorzugsweise Fallfilmverdampfern.

Anschließend wird der pH-Wert des Produktes auf einen Wert von etwa 4,5 bis etwa 5,5 eingestellt, und nämlich mittels der Zugabe einer organischen Säure wie vorstehend definiert. In einer bevorzugten Ausführungsform wird der pH auf einen Wert von etwa 4,7 bis etwa 5,0, besonders bevorzugt auf 3,9 eingestellt

### GEWERBLICHE ANWENDBARKEIT

Ein weiterer Gegenstand der vorliegenden Erfindung ist das Tierfutterzusatz, wie vorstehend definiert, erhältlich durch das Verfahren, wie ebenfalls vorstehend definiert.

Ein weiterer Gegenstand der vorliegenden Erfindung ist die Verwendung des erfindungsgemäßen Tierfutterzusatzes als Melasse-Ersatzstoff bei der Herstellung von Tierfutter.

Ein weiterer Gegenstand der vorliegenden Erfindung ist ein Tierfutter enthaltend den erfindungsgemäßen Tierfutterzusatz. In einer bevorzugten Ausführungsform enthält das Tierfutter keine Melasse.

Ein weiterer Gegenstand der vorliegenden Erfindung ist ein Verfahren zur Herstellung eines Tierfutters wie vorstehend beschrieben, umfassend oder bestehend aus den folgenden Schritten:
- Bereitstellen erfindungsgemäßen Tierfutterzusatzes, und
- Vermischen eines Trockenfutters mit dem erfindungsgemäßen Tierfutterzusatz.

Die Auswahl des Trockenfutters ist unkritisch und wird nur durch Einsatzzweck oder Geschmack bestimmt. In Sinne der vorliegenden Erfindung kommen alle Trockenfutter (z.B. alle kommerziell erhältlichen Trockenfutter), die für eine Mischung mit Melasse geeignet sind.

### BEISPIELE

### Beispiel 1

100 kg Magermilch folgender Zusammensetzung:

| **MAGERMILCH** | **Menge [Gew.-%]** |
|---|---|
| Lactose | 4,9 |
| Proteine | 3,4 |
| Mineralien | 0,8 |
| Glucose | 0,01 |
| Galactose | 0,01 |
| Wasser | Ad 100 |

wurde bei 15°C einer Ultrafiltration mit einer Membran mit einer Porenweite von 15.000 Dalton unterworfen, wobei als Zwischenprodukt ein proteinarmes Permeat P1 erhalten, welches die folgende Zusammensetzung aufwies:

| **PERMEAT DES SCHRITTES (II)** | **Menge [Gew.-%]** |
|---|---|
| Lactose | 5,0 |
| Proteine | 0,2 |
| Mineralien | 0,3 |
| Glucose | 0,01 |
| Galactose | 0,01 |
| Wasser | Ad 100 |

Das Permeat des Schrittes (ii) wurde anschließend in einem Fallfilmverdampfern aufkonzentriert, so dass ein Zwischenprodukt mit einer Trockenmasse von etwa 50 Gew erhalten wurde. Dieses Zwischenprodukt wies folgende Zusammensetzung auf:

| **ZWISCHENPRODUKT DES SCHRITTES (III)** | **Menge [Gew.-%]** |
|---|---|
| Lactose | 45,0 |
| Proteine | 1,9 |
| Mineralien | 2,7 |
| Glucose | 0,1 |
| Galactose | 0,1 |
| Wasser | Ad 100 |

Das Zwischenprodukt des Schrittes (iii) wurde in einem Rührkessel bei 50 °C auf pH = 6 eingestellt und mit einer solchen Menge Lactase versetzt, dass sich eine Konzentration von etwa 200.000 FCC-Einheiten/kg Lactose ergab. Nach einer Hydrolysezeit von etwa 15 Stunden wurde ein Produkt erhalten, das die folgende Zusammensetzung aufwies:

| **HYDROLOYSEPRODUKT DES SCHRITTES (IV)** | **Menge [Gew.-%]** |
|---|---|
| Lactose | 5,0 |
| Glucose | 20,0 |
| Galactose | 20,0 |
| Proteine | 1,9,0 |
| Mineralien | 2,7 |
| Wasser | Ad 100 |

Das Hydrolyseprodukt des Schrittes (iv) wurde anschließend in einem Fallfilmverdampfer aufkonzentriert, so dass ein Zwischenprodukt mit einer Trockenmasse von etwa 75 Gew.-% erhalten wurde. Das Produkt des Schrittes (v) wies folgende Zusammensetzung auf:

| **PRODUKT DES SCHRITTES (V)** | **Menge [Gew.-%]** |
|---|---|
| Lactose | 7 |
| Proteine | 2,8 |
| Mineralien | 4,1 |
| Glucose | 30 |
| Galactose | 30 |
| Wasser | Ad 100 |

Anschließend wurde das Produkt des Schrittes (v) mit Milchsäure auf einen pH-Wert von 3,9 eingestellt. Das Endprodukt (= P1) des erfindungsgemäßen Verfahrens wies folgende Zusammensetzung auf:

| **ERFINDUNGSGEMÄSSER TIERFUTTERZUSATZ** | **Menge [Gew.-%]** |
|---|---|
| Lactose | 6,8 |
| Proteine | 2,7 |
| Mineralien | 3,9 |
| Glucose | 29,0 |
| Galactose | 29,0 |
| Wasser | Ad 100 |

### Beispiel 2

### Evaluierung von P1 - Vergleich mit Melasse

2 verschiedenen Tierfutter (**V1** und **TF1**) wurden ausgehend aus einem kommerziell erhältlichen Trockenfutter vorbereitet. In einem Fall, wurde das Trockenfutter mit von dem Hersteller empfohlene Menge von Melasse gemischt (Tierfutter V1). Zum Vergleich wurde das Trockenfutter mit dem erfindungsgemäßen Tierfutterzusatz in gleiche Menge wie die Melasse von Tierfutter V1 gemischt (Tierfutter **TF1**). Beide Tierfutter wurden einer Gruppe von 10 Kühen gegeben. Eine erste Woche bekamen die Kühe Tierfutter **V1;** die nachfolgende Woche bekamen sie Tierfutter **TF1.** Die Verabreichung des Futters erfolgte die 2 Wochen nach den genau gleichen Bedingungen Anhand des Futters, das jedes Tier übrigließ, d.h. nicht gegessen hat, konnte festgestellt werden, dass das erfindungsgemäße Tierfutter eine deutlich bessere Akzeptanz seitens der Tiere hatte, wie die Daten der folgenden Tabelle belegen:

| **TIERFUTTER** | **Übriggebliebene Menge pro Mahlzeit [Gew.-%], bezogen auf die gesamte Menge des gegebenen Futters** |
|---|---|
| V1 | 10 |
| TF1 | 3 |

## Patentansprüche

1. Tierfutterzusatz umfassend oder bestehend aus:
(a) Glucose,
(b) Galactose,
(c) Lactose,
(d) aus Milch stammende Mineralien, vorzugsweise aus Kuhmilch,
(e) aus Milch stammenden Proteinen, vorzugsweise aus Kuhmilch,
(f) organische Säure, und
(g) Wasser,
wobei der Bestandteil (c) optional ist.

2. Tierfutterzusatz nach Anspruch 1, umfassend oder bestehend aus:
(a) etwa 20 bis etwa 40 Gew.- % Glucose,
(b) etwa 20 bis etwa 40 Gew.- % Galactose,
(c) 0 bis etwa 40 Gew.-% Lactose,
(d) etwa 1 bis etwa 5 Gew.- % aus Milch stammende Mineralien,
(e) etwa 1 bis etwa 5 Gew.- % aus Milch stammende Mineralien,
(f) etwa 1 bis etwa 7 Gew.-% organische Säure,
mit der Maßgabe, dass sich alle Mengenangaben mit Wasser zu 100 Gew.-% ergänzen.

3. Tierfutterzusatz nach einem der vorhergehenden Ansprüche **dadurch gekennzeichnet, dass** die organische Säure aus der Gruppe bestehend aus Weinsäure, Apfelsäure, Shikimisäure, Milchsäure, Essigsäure, Zitronensäure, Ascorbinsäure, Ameisensäure, Bernsteinsäure und Fumarsäure oder Mischungen daraus ausgewählt ist.

4. Tierfutterzusatz nach einem der vorhergehenden Ansprüche **dadurch gekennzeichnet, dass** der Gehalt an Lactose unter 0,1 Gew.-% liegt.

5. Tierfutterzusatz nach einem der vorhergehenden Ansprüche **dadurch gekennzeichnet, dass** der pH-Wert des Tierfutterzusatzes im Bereich von etwa 4,5 bis etwa 5,5 liegt.

6. Tierfutterzusatz nach einem der vorhergehenden Ansprüche **dadurch gekennzeichnet, dass** die Viskosität nach Brookfield (RVT, Spindel 1, 10 Upm) bei 20 °C des Tierfutterzusatzes im Bereich von etwa 5.000 bis etwa 30.000 mPas liegt.

7. Tierfutterzusatz nach einem der vorhergehenden Ansprüche **dadurch gekennzeichnet, dass** der Brix-Wert des Tierfutterzusatzes im Bereich von etwa 50 bis etwa 90 % liegt.

8. Verfahren zur Herstellung des Tierfutterzusatzes nach einem der vorhergehenden Ansprüche umfassend oder bestehend aus den folgenden Schritten:
(i) Bereitstellen einer Magermilch oder Molke,
(ii) Ultrafiltration der Magermilch oder Molke aus dem Schritt (i) unter Erhalt eines proteinreichen und teildemineralisierten Retentats und eines an Proteinen und Mineralien verarmten Permeats,
(iii) Aufkonzentrierung des Permeats aus dem Schritt (ii) unter Erhalt eines Zwischenprodukts, welches eine Trockenmasse von etwa 40 bis etwa 60 Gew.-% aufweist;
(iv) Hydrolyse des Zwischenprodukts aus dem Schritt (iii) unter Zusatz von Lactase;
(v) Aufkonzentrierung des hydrolysierten Zwischenprodukts aus dem Schritt (iv) unter Erhalt eines Zwischenprodukts, welches eine Trockenmasse von etwa 50 bis etwa 80 Gew.-% aufweist;
(vi) Einstellung des pH-Wertes auf einen Wert von etwa 4,5 bis etwa 5,5.

9. Verfahren nach Anspruch 8, **dadurch gekennzeichnet, dass** man die Ultrafiltration mit einer Membran durchführt, die eine mittlere Porengröße von etwa 1.000 bis etwa 50.000 Dalton aufweisen.

10. Verfahren nach einem der vorhergehenden Ansprüche, **dadurch gekennzeichnet, dass** die Trockenmasse des im Schritt (iii) gewonnenen Zwischenproduktes m Bereich von etwa 45 bis etwa 55 % liegt.

11. Verfahren nach einem der vorhergehenden Ansprüche, **dadurch gekennzeichnet, dass** man dem Zwischenprodukt aus Schritt (iii) Lactase in einer Menge von 180.000 bis 250.000 FCC-Einheiten pro kg zu hydrolysierender Lactose zusetzt.

12. Verfahren nach einem der vorhergehenden Ansprüche, **dadurch gekennzeichnet, dass** die Trockenmasse des Zwischenproduktes des Schrittes (v) im Bereich von etwa 65 bis etwa 75 % liegt.

13. Verwendung des Tierfutterzusatz nach einem der vorhergehenden Ansprüche 1 bis 7 als Melasse-Ersatzstoff bei der Herstellung von Tierfutter.

14. Tierfutter enthaltend den Tierfutterzusatz nach einem der vorhergehenden Ansprüche 1 bis 7.

15. Verfahren zur Herstellung des Tierfutters nach Anspruch 14 umfassend die folgenden Schritte:
- Bereitstellen des Tierfutterzusatzes nach einem der vorhergehenden Ansprüche 1 bis 7,
- Vermischen eines Trockenfutters mit dem Tierfutterzusatz nach einem der vorhergehenden Ansprüche 1 bis 7.
